# EUROPEAN PATENT SPECIFICATION

(11) **EP 1 410 833 B1**
(45) Date of publication and mention of the grant of the patent: **06.08.2008**
(21) Application number: 03023431.4
(22) Date of filing: 17.10.2003
(51) Int. Cl.: B01D 45/06, B01D 45/08, F24C 15/20

(54) **Filtration device for extractor hoods and/or filtering hoods**
Filtervorrichtung für Dunstabzugshauben und/oder Filterhauben
Dispositif de filtration pour des hottes aspirantes et/ou des hottes de filtration

(30) Priority: 17.10.2002 IT BO20020654
(43) Date of publication of application: 21.04.2004
(73) Proprietor: Befera, Tiziana, 60044 Fabriano (AN) (IT)
(72) Inventor: Befera, Tiziana, 60044 Fabriano (AN) (IT)
(74) Representative: di Francia, Vincenzo

(56) References cited:
- WO-A-88/04952
- DE-A- 2 412 700
- DE-B- 1 150 603
- DE-U- 7 524 852
- DE-U- 20 210 968
- US-A- 2 354 466
- US-A- 3 566 585
- US-A- 3 813 856
- US-A- 5 147 427
- US-A- 5 342 422

## Description

The present invention relates to a filtration device for extractor hoods and/or filtering hoods and the like.

Currently, use is known of extractor hoods and/or filtering hoods intended to eliminate fat, fumes and vapors produced by cookers and the like. For this purpose, these hoods are provided with an appropriately provided filtering means suitable to retain the unwanted substances.

In particular, hoods that support grilles provided with acrylic filters and the like are widely used. These filters require periodic replacement in order to maintain good efficiency and also do not provide adequate fire protection.

It is also known to use filtering panels that are constituted by a multilayer metallic mesh, made for example of aluminum, which are particularly suitable to retain fatty substances. These panels do not require period replacement and can be washed with conventional means. In this regard, however, the fact is noted that this washing often does not allow to achieve complete cleaning of the panels due to the clogging of the metallic mesh. Moreover, even these filtering panels do not provide fire protection, and this is even more important when easily flammable fat particles accumulate.

A problem that occurs commonly in the manufacture of extractor hoods and/or filtering hoods is the need to vary conveniently their dimensions according to requirements, for example for small and large cookers or other sectors in general. Such filtering means in fact has limited modularity and also has assembly difficulties that hinder cleaning and maintenance.

In order to obviate these drawbacks, it has been suggested to use hoods provided with modular filtration units, as shown in EP - 856347. These modular filtration units are substantially constituted by a plurality of profiled members that are suitable to be fixed between opposite heads and cooperate so as to form a labyrinth-like path, which is adapted to be crossed by the aspirated fumes and vapors. The modular filtration units are fitted in series on a supporting frame and are arranged longitudinally side by side.

Another problem that occurs in the manufacture of extractor hoods and/or filtering hoods is the need to avoid the reverse flow of cold air from outside. This usually makes it necessary to use suitable one-way valves at the intake components, with consequent problems in terms of cleaning and maintenance and in terms of additional costs.

The aim of the present invention is to solve the above cited problem, by providing a filtration device for extractor hoods and/or filtering hoods that ensures high functionality in use and in particular ensures optimum filtration of fat at all the various degrees of suction provided for the hood.

Within this aim, an object of the present invention is to provide a filtration device for extractor hoods and/or filtering hoods that is capable of avoiding the reverse flow of cold air from outside.

Another object of the present invention is to provide a filtration device that allows to perform complete cleaning easily.

Another object of the present invention is to provide a filtration device that is simple in concept, assuredly reliable in operation, and has a relatively low cost.

This aim and these objects are achieved, according to the present invention, by the filtration device for extractor hoods and/or filtering hoods that forms, together with the interior of the hood, a compartment that is suitable to be placed in partial vacuum, characterized in that it includes: at least one supporting panel, which is suitable to be inserted so as to close the chamber of the hood and has a plurality of longitudinal slots; at least one movable member, which is formed by a profiled member that is suitable to be superimposed on the supporting panel and has contoured portions that are suitable to cooperate respectively with the slots of the supporting panel in order to form a labyrinth-like path that is adapted to be crossed by the aspirated fumes and vapors; two heads, which are suitable to be associated with the supporting panel at opposite sides, each having a guiding means suitable to be coupled to the opposite ends of the movable member, so as to allow the sliding of the movable member between a lowered inactive position for covering and closing the slots and an active position that is raised by way of, and as a function of, the suction induced in the compartment of the hood by aspiration through the slots of the supporting panel.

The details of the invention will become better apparent from the detailed description of a preferred embodiment of the filtration device, illustrated by way of nonlimiting example in the accompanying drawings, wherein:

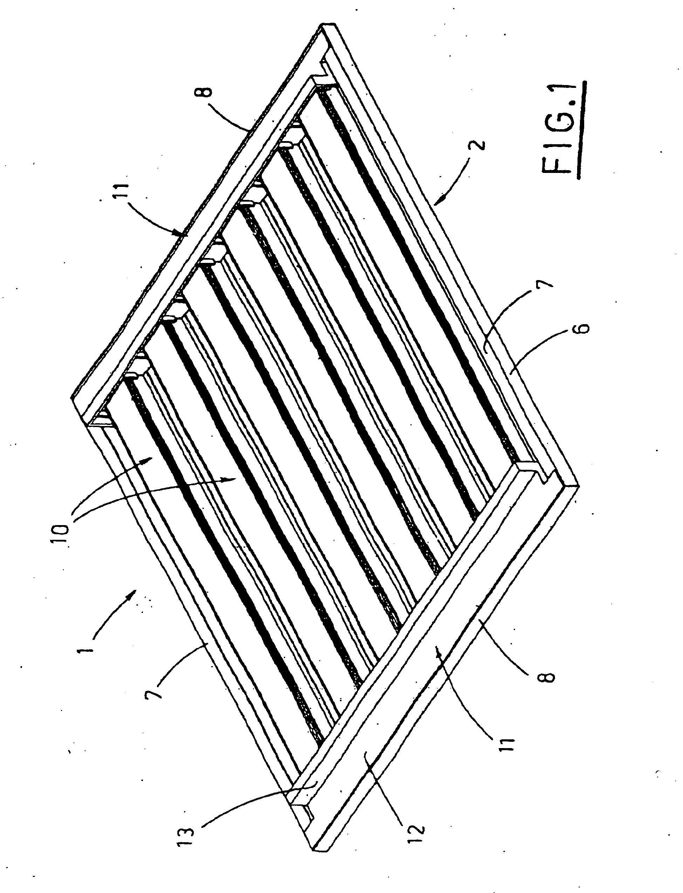

Figure 1 is a perspective view of the filtration device for extractor hoods and/or filtering hoods according to the invention;

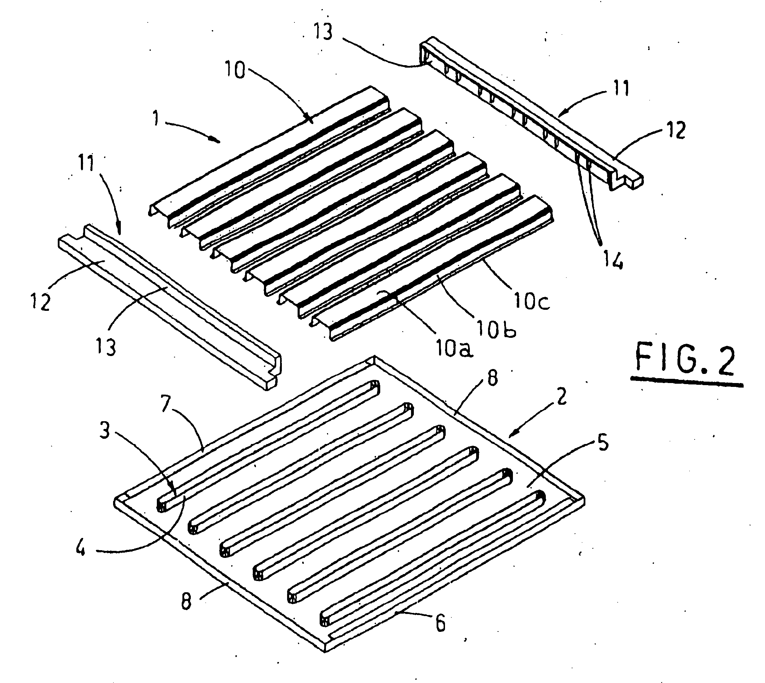

Figure 2 is a corresponding exploded view thereof;
Figures 3 and 4 are transverse sectional views of the filtration device in two different operating configurations;
Figure 5 is a sectional view, taken along a longitudinal plane, of an engagement means of the filtration device;
Figure 6 is a sectional view of a particular embodiment of the guiding means of the movable member;
Figures 7 and 8 are schematic sectional views, taken along a transverse plane, of a different embodiment of the filtration device.

With particular reference to the above figures the reference numeral 1 generally designates a filtration device for extractor hoods and/or filtering hoods.

The filtration device 1 includes a supporting panel 2 that is substantially rectangular and has a series of mutually equidistant longitudinal slots 3 so as to form a sort of grille; the panel 2 is preferably made of metallic material, for example stainless steel. The slots 3 have perimetric edges 4 that protrude with respect to the surface 5 of the panel 2.

The supporting panel 2 further has, along its sides, respective raised shoulders 6 and 8; the shoulders 6 arranged along the longitudinal sides have an edge 7 that is folded toward the inside of the panel 2 so as to form a guide for fitting on the hood.

The filtration device 1 further includes a series of movable members 10 formed by conveniently contoured profiled members, which are designed to be arranged longitudinally side by side; the profiled members are preferably made of metallic material, for example steel, aluminum alloy, metal plate to be painted, and the like.

More particularly, each one of the movable members 10 is constituted by a profiled member that has a cross-section shaped like an inverted letter U, in which there is a bottom 10a and there are mutually opposite sides 10b that protrude from the bottom 10a; the sides 10b have, along their longitudinal margins, corresponding edges 10c that are folded outward.

The movable members 10 are associated, at their opposite ends, with two heads 11 that are likewise fitted on the supporting panel 2 and are preferably produced by molding for example an aluminum alloy.

The heads 11 are constituted respectively by a strip 12, which is suitable to be placed in abutment against a corresponding transverse shoulder 8 of the supporting panel 2; the strip 12 is locked adjacent to the shoulder 8, at its ends, by way of a pair of prism-shaped nuts 9 that are fixed by means of appropriate screws to the edge 7 of the shoulders 6. A wall 13 protrudes frontally from the strip 12 and has an upper edge 13a and side edges 13b that are folded so as to form a front cavity. Inside the cavity, pairs of ridges 14 protrude from the wall 13; the movable members 10 engage between the ridges, which are suitable to act as a guide for the lateral sides 10b of the movable members. The extension of the ridges 14 is limited to an upper portion of the wall 13, substantially starting from the upper edge 13a, so as to allow the upward sliding of the coupled movable members 10.

The movable members 10, arranged longitudinally side by side, are therefore coupled in series to the opposite heads 11, by inserting the ends of the profiled members between the ridges 14 that protrude frontally from the heads. The movable assembly thus formed is fitted to the supporting panel 2, arranging the strips 12 of the heads 11 adjacent to the transverse shoulders 8 of the panel.

It should be noted that in the active configuration the movable members 10 are superimposed respectively on the slots 3 formed longitudinally on the supporting panel 2.

The filtration device is inserted so as to close the chamber of the hood and forms, together with the interior of the hood, a compartment that is suitable to be placed in partial vacuum by the suction-generating components.

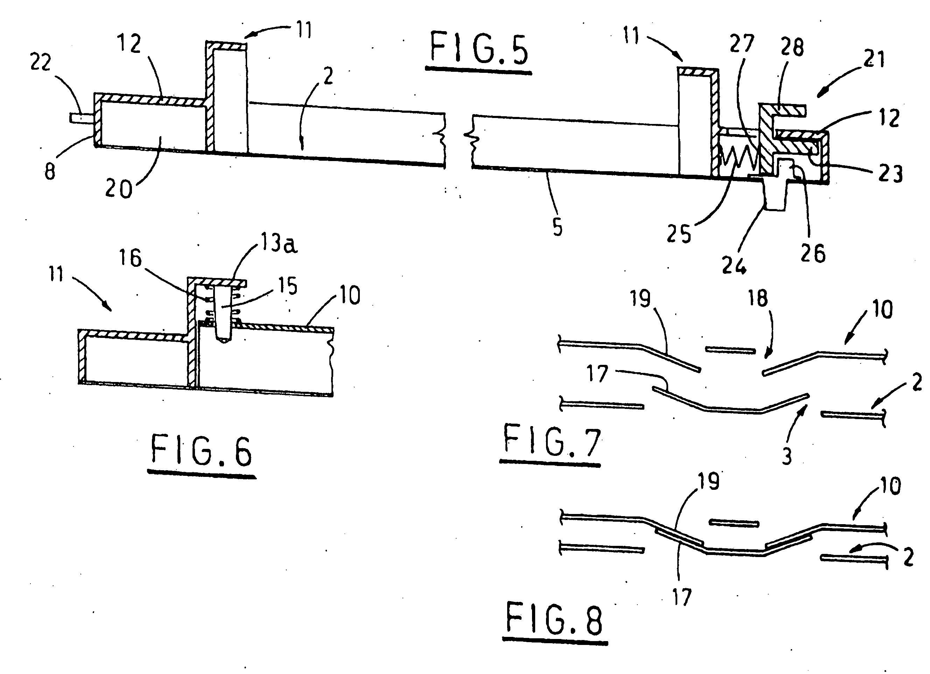

For this purpose, the heads 11 are provided with respective engagement members 20 and 21, which engage suitable openings formed in the edge of the hood (see Figure 5). More particularly, the head 11 arranged to the rear with respect to the hood is provided with at least one fixed engagement member 20, which is constituted by a prism-shaped body that is inserted in a corresponding seat that is formed inside the strip 12 and provided with a lug 22 that protrudes through a slot of the shoulder 8 and is suitable to engage a corresponding opening formed in the edge of the hood.

The head 11 that is arranged at the front on the hood is instead provided with at least one elastically movable engagement member 21, which is constituted by a slider 23 that is inserted slidingly in the seat formed inside the strip 12 and is suitable to be actuated by a knob 24, in contrast with a spring 25 that acts for example by flexing. The knob 24 has a wing 26 that passes through an appropriately provided slot formed in the surface 5 of the panel 2 and engages a chamber of the slider 23 that is provided with a transverse abutment shoulder 27; conveniently, the wing 26 is inserted longitudinally through the slot and then turned at right angles into the active position, so as to face the shoulder 27. In this active position, the knob 24 covers substantially the slot formed in the surface 5 of the panel. The slider 23 forms a protruding lug 28, which is suitable to engage in turn a corresponding opening formed in the edge of the hood.

The elastic actuation of the knob 24 obviously allows the release and engagement of the engagement member 21.

Naturally, the dimensions of the filtration device may be different by varying the dimensions of the supporting panel and the number of movable members used. Conveniently, it is possible to arrange side by side a plurality of filtration devices fitted in series on the hood chamber so as to adapt to the various requirements of use.

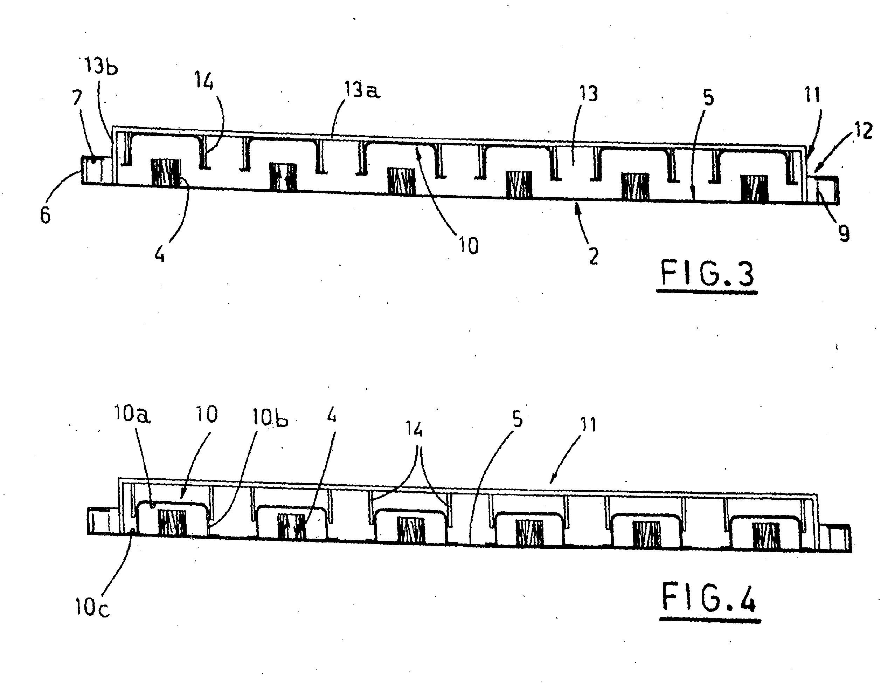

In the practical operation of the filtration device, the negative pressures produced inside the hood at the various speeds of the suction-generating components cause the sliding of the movable members 10, guided at their opposite ends respectively by the pairs of ridges 14 that protrude from the strips 11, into raised active positions, so as to produce aspiration of the fumes and vapors through the slots 3 of the supporting panel 2 (Figure 3). When fully raised, the movable members 10, guided along the lateral sides 10a between the ridges 14, stop with their bottom 10a in abutment against the upper edge 13a of the wall 13 and with their corresponding edges 10c in abutment against the lower margins of the ridges 14.

It should be noted that the profiled members that constitute the movable members 10 form, in association with the perimetric edges 4 of the slots 3, a labyrinth-like path suitable to be crossed by the aspirated fumes and vapors. This allows to achieve an effective filtering action and in particular the filtration of fat particles.

In particular, the fumes and vapors loaded with fat particles are aspirated along a path that skims the perimetric edges 4 of the slots 3, the inside of the movable members 10, and finally the outer face of the lateral sides 10a of the movable members 10, gradually becoming purified of the fat particles.

When instead the hood is inactive, the members 10 descend by gravity into a lowered inactive position so as to cover the slots 3 of the supporting panel 2 (Figure 4). In this position, the edges 10c of the movable members that are folded outward rest on the surface 5 of the panel 2 so as to prevent the reverse flow of cold air from outside through the slots 3 of the supporting panel 2.

As an alternative, the movable members 10 can be guided by pins 15 that protrude vertically inside the front cavity formed by the wall 13 of the strips 11, starting from the upper edge 13a; the pins 15 pass through corresponding holes formed in the movable members 10 (Figure 6). Respective springs 16, for example of the helical type, can be fitted on the pins 16 and are suitable to act elastically on the movable members 10; in any case, the use of these springs that act on the movable members 10 can be provided also in the previously described embodiment.

The elastic thrust of the springs 16 combines with the weight of the movable members 10, and the degree to which they rise and open the labyrinth-like path depends on the degree of vacuum generated inside the hood depending on the speeds at which the suction-generating components thereof operate. This produces self-regulation of the filtration device depending on the air flow.

The filtration device according to the invention accordingly achieves the aim of ensuring broad operating functionality. In particular, fat filtration is very effective at the various speeds of the suction-generating components.

One prerogative of the described filtration device is that it prevents the reverse flow of cold air from outside. The movable members 10 in fact also act, in the inactive position, as members for closing the slots 3 through which the fumes and vapors are aspirated in the active step. This allows to avoid the use of appropriately provided one-way valves at the suction-generating components or of other closure means, since the filtration device is substantially like a valve.

Further, the filtration device according to the invention is capable of performing effective fire protection. A flame in fact cannot propagate downward along the labyrinth-like path formed by the described filtering members.

Another important characteristic of the filtration device according to the invention is that it allows easy cleaning by way of conventional washing devices. This is allowed in particular by the ease of the disassembly of the movable members, which does not require specific tools.

Obviously, the correct cleaning of the filtration device helps to ensure good operation of the hood motor with high efficiency at all times.

Another advantage provided by the filtration device according to the invention is that it has a simple structure that ensures safe and effective operation, with proportionally low costs.

The movable members 10 can be provided monolithically, for example from a metal plate by way of appropriate bending. Suitable openings for the passage of the fumes and vapors are of course provided in the metal plate.

Figures 7 and 8 illustrate a different embodiment of the filtration device, in which the slots 3 are formed in the panel 2 by way of suitable cutting lines, by folding upward, obliquely with respect to the surface 5, the wings 17 formed by the cutting lines. In the illustrated case, the wings 17 are arranged in pairs and are directed symmetrically on mutually opposite sides.

The movable members, again designated by the reference numeral 10 for the sake of clarity, is formed as a single part constituted by an additional panel, in which appropriate cutting lines form corresponding openings 18, folding downward the wings 19 formed by the cutting lines. In particular, the wings 19 of the movable member 10 are complementary to the wings 17 of the panel 2, so as to mate with them in the inactive position, closing the passage of the fumes and vapors (Figure 8).

In the raised active position, instead, the movable member 10 forms with respect to the panel 2, by virtue of the respective oppositely facing wings 17 and 19, a labyrinth-like path that is adapted to be crossed by the aspirated fumes and vapors (Figure 7).

In the practical embodiment of the invention, the materials used, as well as the shapes and the dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A filtration device for extractor hoods and/or filtering hoods that forms, together with the interior of the hood, a compartment that is suitable to be placed in partial vacuum; **characterized in that** it comprises: at least one supporting panel (2), which is suitable to be inserted so as to close the chamber of said hood and has a series of longitudinal slots (3); at least one movable member (10), which is formed by a profiled member that is suitable to be superimposed on said supporting panel (2) and has contoured portions that are suitable to cooperate respectively with said slots (3) of the supporting panel (2) in order to form a labyrinth-like path that is adapted to be crossed by the aspirated fumes and vapors; two heads (11), which are suitable to be associated with said supporting panel (2) at opposite sides, each having a guiding means (14, 15) suitable to be coupled to the opposite ends of said movable member (10), so as to allow the sliding of said movable member (10) between a towered inactive position for covering and closing said slots (3) and an active position that is raised by way of, and as a function of, the suction induced in said compartment of the hood by aspiration through said slots (3) of the supporting panel (2).

2. The device according to claim 1. **characterized in that** said movable member (10) is constituted by a series of profiled members that are designed to be arranged longitudinally side by side so as to overlap with respect to said slots (3) of the supporting panel (2) and are coupled respectively, at their opposite ends, to said guiding means (14, 15).

3. The device according to claim 2, **characterized in that** said movable members (10) are constituted respectively by a profiled member that has a cross-section shaped like an inverted letter U and is suitable to provide, in said raised active position, said labyrinth-like path adapted to be crossed by the aspirated fumes and vapors.

4. The device according to claim 3, **characterized in that** said profiled members that constitute the movable members (10) have, starting from a bottom (10a), mutually opposite side walls (10b) from which corresponding edges (10c) extend along the longitudinal margins, said edges being folded outward and being suitable to rest, in said inactive position, on the surface (5) of said supporting panel (2), so as to prevent the return of cold air from outside through said slots (3) of the supporting panel (2).

5. The device according to claim 1, **characterized in that** said longitudinal slots (3) are distributed so as to be mutually equidistant on said supporting panel (2).

6. The device according to claim 1, **characterized in that** said longitudinal slots (3) have perimetric edges (4) that protrude upward with respect to the surface (5) of said supporting panel (2).

7. The device according to claim 1. **characterized in that** said heads (11) are respectively constituted by a strip (12) from which a wall (13) protrudes frontally, said wall being provided with said guiding means (14, 15).

8. The device according to claim 7, **characterized in that** said guiding means (14) are constituted by pairs of ridges that protrude with a convenient spacing from said wall (13) of the head (11) and are suitable to engage corresponding lateral sides (10b) of said movable member (10).

9. The device according to claim 7, **characterized in that** said guiding means (15) is constituted by pins (15) that protrude vertically inside a front cavity formed by said wall (13), so as to pass through corresponding holes formed at the ends of said movable member (10), and are provided with elastic means (16) that are suitable to act on said movable member (10).

10. The device according to claim 7, **characterized in that** said wall (13) of the head (11) has an upper edge (13a) and lateral edges (13b) that are folded so as to form a front cavity at which said guiding means (14, 15) are arranged.

11. The device according to claim 7, **characterized in that** said strip (12) is suitable to be placed in abutment against a corresponding transverse shoulder (8) of said supporting panel (2) and is locked, at its ends, by way of prism-shaped nuts (9), which are fixed to an edge (7) of respective longitudinal shoulders (6) of said supporting panel (2).

12. The device according to claim 1, **characterized in that** said supporting panel (2) has, along its sides, respective raised shoulders (6, 8) in which the shoulders (6) arranged along the longitudinal sides are provided with an edge (7) that is folded toward the inside of said panel (2), so as to form a guide for fitting on said hood.

13. The device according to claim 1, **characterized in that** said supporting panel (2) and said movable member (10) have respective inclined wings (19,17) that are provided by way of suitable cutting lines that are suitable to form corresponding openings (3, 18) on said supporting panel (2) and said movable member (10), and are shaped complementarity so as to mate in said lowered inactive position.

14. The device according to claim 1, **characterized in that** said supporting panel (2) is suitable to be coupled detachably to said hood by way of engagement members (20, 21) that are accommodated inside said mutually opposite heads (11) and comprise at least one elastically movable engagement member (21), which is constituted by a slider (23) that is inserted slidingly in a seat formed inside a corresponding head (11) and is suitable to be actuated, in contrast with elastic means (25), by a knob (24) that is provided with a wing (26) that passes through a slot formed on the surface of said panel (2) in order to engage a chamber of said slider (23) that is provided with a transverse abutment shoulder (27).

## Patentansprüche

1. Filtervorrichtung für Dunstabzugshauben und/oder Filterhauben, die zusammen mit dem Inneren der Haube ein Fach bildet, das dazu geeignet ist; teilweise in Vakuum gelegt zu werden, **dadurch gekennzeichnet, dass** die Filtervorrichtung umfasst: mindestens eine Trägerplatte (2), welche dazu geeignet ist, zum Schließen des Haubenraums eingesetzt zu werden, und eine Reihe von Längsschlitzen (3) hat; mindestens ein bewegliches Element (10), das die Form eines Profils hat, welches dazu geeignet ist, auf der Trägerplatte (2) übergelagert zu werden, und profilierte Teile aufweist, die dazu geeignet sind, jeweils mit den Schlitzen (3) der Trägerplatte (2) zusammenzuarbeiten, um einen labyrinthischen Weg zu bilden, welcher zum Durchgehen von gesaugten Rauchgasen und Dämpfen geeignet ist; ein Paar Köpfe (11), welche dazu geeignet sind, bei ihren gegenüberliegenden Seiten mit der Trägerplatte (2) assoziiert zu sein, wobei jeder der Köpfe Führungsmittel (14, 15) aufweist, welche zur Kupplung mit den gegenüberliegenden Enden des beweglichen Elements (10) geeignet sind, um das Gleiten des beweglichen Elements (10) zwischen einer zur Abdeckung und zum Schießen der Schlitze (3) unteren inaktiven Stellung und einer oberen aktiven Stellung zu gestatten, wobei das bewegliche Element (10) zu der oberen aktiven Stellung infolge des und abhängig vom im Fach der Haube vom Saugen durch die Schlitze (3) der Trägerplatte (2) bewirkten Unterdruck aufgehoben wird.

2. Vorrichtung nach Anspruch 1, **dadurch gekennzeichnet, dass** das bewegliche Element (10) aus einer Reihe von Profilen besteht, welche gebildet sind, longitudinal nebeneinander angeordnet zu werden, um sich auf die Schlitze (3) der Trägerplatte (2) überzulagern, und welche jeweils bei ihren gegenüberliegenden Enden mit den Führungsmitteln (14, 15) gekuppelt sind.

3. Vorrichtung nach Anspruch 2, **dadurch gekennzeichnet, dass** jede der beweglichen Elemente (10) aus einem Profil gebildet sind, welches in der Form eines umgekehrten U einen Querschnitt hat und dazu geeignet ist, in der oberen aktiven Stellung den labyrinthischen Weg zu bilden, welcher zum Durchgang von gesaugten Rauchgasen und Dämpfen gebildet ist.

4. Vorrichtung nach Anspruch 3, **dadurch gekennzeichnet, dass** die die beweglichen Elemente (10) bildenden Profile ab einer Unterseite (10a) gegenüberliegende Seitenwände (10b) aufweisen, und sich jeweilige Flügel (10c) von den Seitenwänden (10b) entlang die jeweiligen Longitudinalränder erstrecken, wobei die Flügel (10c) ausgebogen und geeignet sind, in der inaktiven Stellung auf der Oberfläche (5) der Trägerplatte (2) aufzuliegen, um durch die Schlitze (3) der Trägerplatte (2) von außen die Rückkehr von kalten Luft zu verhindern.

5. Vorrichtung nach Anspruch 1, **dadurch gekennzeichnet, dass** die Längsschlitze (3) gegenseitig gleichabständig auf der Trägerplatte (2) angeordnet sind.

6. Vorrichtung nach Anspruch 1, **dadurch gekennzeichnet, dass** die Längsschlitze (3) Konturränder (4) haben, welche aus der Oberfläche (5) der Trägerplatte (2) hinauf vorstehen.

7. Vorrichtung nach Anspruch 1, **dadurch gekennzeichnet, dass** die Köpfe (11) jeweils aus einer Leiste (12) gebildet sind, wobei eine Wand (13), die mit den Führungsmitteln (14, 15) versehen ist, von der Leiste (12) vorwärts vorsteht.

8. Vorrichtung nach Anspruch 7, **dadurch gekennzeichnet, dass** die Führungsmittel (14) aus Paaren von Rippen bestehen, welche im geeigneten Abstand von der Wand (13) des Kopfs (11) vorstehen und geeignet sind, mit entsprechenden Seitenwänden (10b) des beweglichen Elements (10) zu passen.

9. Vorrichtung nach Anspruch 7, **dadurch gekennzeichnet, dass** das Führungsmittel (15) aus Zapfen (15) besteht, welche vertikal in einem vorderen von der Wand (13) gebildeten Holraum vorstehen, um in entsprechenden an den Enden des beweglichen Elements (10) gebildeten Löchern hineinzustecken, und mit elastischen Mitteln (16) versehen sind, welche geeignet sind, auf das bewegliche Element (10) zu wirken.

10. Vorrichtung nach Anspruch 7, **dadurch gekennzeichnet, dass** die Wand (13) des Kopfs (11) einen oberen Rand (13a) und seitliche Ränder (13b) hat, welche gebogen sind, um einen vorderen Holraum zu bilden, in dem die Führungsmittel (14,15) angeordnet sind.

11. Vorrichtung nach Anspruch 7, **dadurch gekennzeichnet, dass** die Leiste (12) geeignet ist, eine jeweilige quere Schulter (8) der Trägerplatte (2) anzuschlagen, und an beiden Enden durch prismenförmige Schraubenmütter (9) blockiert wird, wobei die Schraubenmütter (9) zu einem Rand (7) von jeweiligen Längsschultern (6) der Trägerplatte (2) befestigt sind.

12. Vorrichtung nach Anspruch 1, **dadurch gekennzeichnet, dass** die Trägerplatte (2), entlang ihre Seiten jeweilige erhöhte Schultern (6, 8) aufweist, wobei die Schultern (6), die entlang die Längsseiten angeordnet sind, mit einem Rand (7) versehen sind, welcher zu der Innenseite der Trägerplatte (2) gebogen ist, um eine Führung für das Einstecken auf der Haube zu bilden.

13. Vorrichtung nach Anspruch 1, **dadurch gekennzeichnet, dass** die Trägerplatte (2) und das bewegliche Element (10) jeweilige geneigte Flügel (17, 19) aufweisen, die durch geeignete Schneidriefen gebildet sind, um jeweils auf der Trägerplatte (2) und dem beweglichen Element (10) jeweilige Öffnungen (3, 18) zu bilden, und die komplementär sind, um in der unteren inaktiven Stellung aufeinanderzuliegen.

14. Vorrichtung nach Anspruch 1, **dadurch gekennzeichnet, dass** die Trägerplatte (2) geeignet ist, mit der Haube durch Kupplungsorgane (20, 21) abnehmbar verbunden zu werden, welche in der Innenseite der gegenüberliegenden Köpfe (11) angeordnet sind und mindestens ein elastisch bewegliches Kupplungsorgan (21) umfassen, welches aus einem Läufer (23) gebildet ist, der in einem in der Innenseite eines jeweiligen Kopfs (11) gebildeten Sitz gleitend eingesteckt wird und der geeignet ist, gegen die Wirkung eines elastischen Mittels (25) durch einen mit einem Flügel (26) versehenen Ballengriff (24) betätigt zu werden, wobei der Flügel (26) durch einen Spalt auf der Fläche der Trägerplatte (2) einsteckt, um mit einem Raum des Läufers (23) zu passen, wobei der Raum eine quere Schulter (27) aufweist.

## Revendications

1. Dispositif de filtration pour des hottes aspirantes et/ou des hottes de filtration, qui définit avec l'intérieur de la hotte un compartiment apte à être placé à vide; **caractérisé en ce qu'**il comprend: au moins un panneau de support (2) apte à être inséré comme fermeture de l'embrasure de ladite hotte et présentant une série d'interstices (3) longitudinaux; au moins un élément mobile (10) réalisé par un profilé apte à être superposé audit panneau de support (2) et présentant des parties profilées aptes à coopérer respectivement avec lesdits interstices (3) du panneau de support (2) pour définir un parcours labyrinthique destiné à être traversé par les fumées et les vapeurs en aspiration; un couple de culasses (11) aptes à être associées audit panneau de support (2), en correspondance des côtés opposés, et présentant chacune des moyens de guide (14, 15) aptes à être couplés aux extrémités opposées dudit élément mobile (10), de manière à permettre le coulissage dudit élément mobile (10) entre une position de repos baissée de couverture et fermeture desdits interstices (3), et une position active, levée pour l'effet et en fonction des dépressions induites dans ledit compartiment de la hotte, pour aspiration à travers lesdits interstices (3) du panneau de support (2).

2. Dispositif selon la revendication 1, **caractérisé en ce que** ledit élément mobile (10) est constitué par une série de profilés destinés à être placés longitudinalement l'un à côté de l'autre de manière à se superposer respectivement auxdits interstices (3) du panneau de support (2) et respectivement couplés, aux extrémités opposées, auxdits moyens de guide (14, 15).

3. Dispositif selon la revendication 2, **caractérisé en ce que** lesdits éléments mobiles (10) se composent respectivement d'un profilé ayant, en section, forme de U renversé, apte à réaliser, dans ladite position active levée, ledit parcours labyrinthique destiné à être traversé par les fumées et les vapeurs en aspiration.

4. Dispositif selon la revendication 3, **caractérisé en ce que** lesdits profilés constituant les éléments mobiles (10) présentent, à partir d'un fond (10a), des parties latérales opposées (10b) desquelles s'étendent le long des marges longitudinales, des relatifs bords (10c) repliés vers l'extérieur, aptes à appuyer, dans ladite position de repos, sur le plan (5) dudit panneau de support (2), pour empêcher le retour d'air froid de l'extérieur à travers les interstices (3) du panneau de support (2).

5. Dispositif selon la revendication 1, **caractérisé en ce que** lesdits interstices (3) longitudinaux sont distribués équidistants entre eux sur ledit panneau de support (2).

6. Dispositif selon la revendication 1, **caractérisé en ce que** lesdits interstices (3) longitudinaux présentent des bords périmétraux (4) qui, dans la partie supérieure, font saillie par rapport au plan (5) dudit panneau de support (2).

7. Dispositif selon la revendication 1, **caractérisé en ce que** les culasses (11) sont constituées respectivement par une bande (12) de laquelle s'étend frontalement une paroi (13), qui présente lesdits moyens de guide (14, 15).

8. Dispositif selon la revendication 7, **caractérisé en ce que** lesdits moyens de guide (14) sont constitués par des couples de nervures en saillie, opportunément espacées, de ladite paroi (13) de la coulasse (11) et aptes à engager des correspondants parties latérales (10b) dudit élément mobile (10).

9. Dispositif selon la revendication 7, **caractérisé en ce que** lesdits moyens de guide (15) sont constitués par des pieux (15) verticalement en saillie à l'intérieur d'une cavité frontale définie par ladite paroi (13), de manière à ce qu'ils traversent des trous correspondants percés sur les extrémités dudit élément mobile (10), et portant des moyens élastiques (16) aptes à fonctionner sur le même élément mobile (10).

10. Dispositif selon la revendication 7, **caractérisé en ce que** ladite paroi (13) de la culasse (11) présente un bord supérieur (13a) et des bords latérales (13b) repliés de manière à ce qu'ils définissent une cavité frontale en correspondance de laquelle ledit moyens de guide (14, 15) sont placés.

11. Dispositif selon la revendication 7, **caractérisé en ce que** ladite bande (12) est apte à être placée en appui contre un relatif rehaussement (8) transversal dudit panneau de support (2) et coincée, aux extrémités, par des écrous (9) en forme de prisme, fixés à un bord (7) des respectifs rehaussements (6) longitudinaux dudit panneau de support (2).

12. Dispositif selon la revendication 1, **caractérisé en ce que** ledit panneau de support (2) présente des respectifs rehaussements (6, 8) relevés le long des côtés, avec les rehaussements (6) placés le long des côtés longitudinaux équipés d'un bord (7) replié vers l'intérieur du même panneau (2) de manière à ce qu'il définit une guide pour l'insertion sur ladite hotte.

13. Dispositif selon la revendication 1, **caractérisé en ce que** ledit panneau de support (2) et ledit élément mobile (10) présentent respectivement des ailettes (17, 19) inclinées, réalisées par des opportunes lignes de découpe apte à définir des relatives ouvertures (3, 18) sur ledit panneau de support (2) et ledit élément mobile (10), et ayant forme complémentaire, de manière à ce qu'elles affleurent dans la même position de repos baissée.

14. Dispositif selon la revendication 1, **caractérisé en ce que** ledit panneau de support (2) est apte à être amoviblement lié à ladite hotte par des dispositifs d'accrochage (20, 21) logés à l'intérieur desdites culasses (11) opposées, et qui comprennent au moins un dispositif d'accrochage (21) élastiquement mobile, constitué par un coulisseau (23) inséré coulissant dans un logement défini à l'intérieur d'une relative culasse (11) et apte à être actionné, à contraste de moyens élastiques (25), par un pommeau (24) qui présente une ailette (26) qui passe à travers une fente pratiquée sur le plan dudit panneau (2) pour engager une embrasure dudit coulisseau (23) équipé d'un rehaussement (27) transversal d'appui.
